# EUROPÄISCHE PATENTSCHRIFT

(11) **EP 3 543 580 B1**
(45) Veröffentlichungstag und Bekanntmachung des Hinweises auf die Patenterteilung: **17.11.2021**
(21) Anmeldenummer: 19164589.4
(22) Anmeldetag: 22.03.2019
(51) Int. Cl.: F16L 53/38, H05B 3/06, F24H 1/10, F16L 25/01, H05B 3/56

(54) **BEHEIZTE MEDIENLEITUNG**
HEATED MEDIA CONDUIT
CONDUITE DE FLUIDE CHAUFFÉE

(30) Priorität: 23.03.2018 DE 102018107005
(43) Veröffentlichungstag der Anmeldung: 25.09.2019
(73) Patentinhaber: Voss Automotive GmbH, 51688 Wipperfürth (DE)
(72) Erfinder: STELLUTO, Michele, 42859 Remscheid (DE); MITTERER, Reiner, 51688 Wipperfürth (DE); SCHWARZKOPF, Otfried, 51515 Kürten (DE)
(74) Vertreter: Dr. Solf & Zapf Patent- und Rechtsanwalts PartG mbB

(56) Entgegenhaltungen:
- EP-A1- 1 125 810
- DE-A1-102010 053 737
- DE-A1-102013 000 588
- DE-U1-202017 101 274

## Beschreibung

### "Beheizte Medienleitung"

Die vorliegende Erfindung betrifft eine beheizte Medienleitung gemäß dem Oberbegriff des Anspruchs 1.

Moderne Verbrennungsmotoren sollen hohe Leistungen bei effizienter Nutzung der Treibstoffe und guten Abgaswerten erbringen. Als Lösung für die Vermeidung von Überhitzung, zur Effizienzsteigerung und zur Kühlung der Abgase und hierdurch auch zur Senkung der in den Abgasen enthaltenen Stickoxide wird die bekannte Wassereinspritzung eingesetzt und weiterentwickelt. Hierbei wird ein feiner Wassernebel aus destilliertem Wasser entweder in den Ansaugtrakt und/oder direkt in den Brennraum gespritzt. Die Verdampfungsenergie sorgt dabei für eine effektive Kühlung der Ladeluft oder des Brennraums und zu einer besseren Füllung im Brennraum. Diese Methode kann sowohl zur Leistungssteigerung als auch zur Einsparung von Brennstoff beitragen. Bei Kraftfahrzeugen, die alltäglich genutzt werden und gegebenenfalls große Strecken zurücklegen, ist es notwendig, eine bestimmte Menge Wasser für die Wassereinspritzung mitzuführen.

Aus der DE 10 2013 000 588 A1 ist eine gattungsgemäß Medienleitung bekannt. Hierzu kann auch auf die Druckschriften EP 1 125 810 A1 oder die DE 10 2010 053 737 A1 verwiesen werden.

Der Erfindung liegt die Aufgabe zu Grunde, eine Medienleitung zur Verfügung zu stellen, die eine optimale Funktion der Wassereinspritzung im üblichen Temperaturbereich, d. h. bei Außentemperaturen unter Null und über Null sicherstellen kann.

Erfindungsgemäß wird dies durch die Merkmale des Anspruchs 1 gelöst. Die Erfindung basiert dabei auf der Erkenntnis, dass bei Temperaturen von 0 °C und weniger durch die Beheizung der wasserführenden Leitung ein Einfrieren verhindert wird und im nahen Motorbereich, in dem schnell die Temperaturen über 0 °C ansteigen und oftmals eine Wassereinspritzung bei kaltem Motor nicht notwendig ist, die wasserführende Leitung nicht beheizt ist, so dass die wasserführende Rohr- oder Schlauchleitung bzw. Medienleitung nur über eine Teillänge beheizbar ist. Hierdurch kann einerseits die Medienleitung kostengünstiger hergestellt werden, da nur eine Teilbewicklung mit einem Heizleiter erforderlich ist, und darüber hinaus kann auch elektrische Energie eingespart werden.

Erfindungsgemäß ist somit der unbeheizte Bereich der Rohr- oder Schlauchleitung bzw. Medienleitung motornah in einem Kraftfahrzeug angeordnet. In diesem motornahen Bereich herrschen nach Erwärmung des Motors Temperaturen, die ein Einfrieren verhindern. An die erfindungsgemäße teilbeheizte Rohr- oder Schlauchleitung bzw. Medienleitung kann über einen ersten Anschlussverbinder als Abzweigverbinder eine zweite beheizte Rohr- oder Schlauchleitung und/oder eine dritte beheizte oder unbeheizte Rohr- oder Schlauchleitung angeschlossen sein. Weiterhin kann es erfindungsgemäß vorteilhaft sein, wenn die erste teilbeheizte Rohr- oder Schlauchleitung über einen mit einer Heizeinrichtung beheizten Anschlussverbinder mit einer zweiten teilbeheizten Rohr- oder Schlauchleitung, die wie die erste teilbeheizte Leitung ausgebildet ist, und einer zweiten beheizten Rohr-oder Schlauchleitung verbunden ist, wobei die zweite teilbeheizte oder vollständig beheizte Rohr- oder Schlauchleitung endseitig über einen Anschlussverbinder beispielsweise an ein Aggregat anschließbar und wiederum lösbar ist, wobei dieser Anschlussverbinder selbst beheizt oder unbeheizt ausgebildet sein kann. Die Heizeinrichtung der teilbeheizten oder über ihre Länge vollständig beheizten Rohr-oder Schlauchleitungen und/oder der Anschlussverbinder, sofern sie beheizt sind, kann aus umfangsgemäß spiralförmig gewickelten Heizleitern gebildet werden, wobei derartige Heizleiter auch paarweise gewickelt ausgebildet sein können, wobei in diesem Fall die paarweise gewickelten Einzelleiter endseitig über elektrische Verbinder verbunden sind. Die Heizeinrichtungen vorhandener Anschlussverbinder können auch durch Weiterführungsabschnitte der Heizleiter der über ihre Gesamtlänge beheizten Rohr-oder Schlauchleitung oder der über eine Teillänge beheizten Rohr- oder Schlauchleitung gebildet werden. Vorteilhafterweise werden die Heizleiter der elektrischen Heizeinrichtung durch Litzenleiter gebildet.

Erfindungsgemäß wird somit eine beheizte Medienleitung geschaffen, die in vielfältiger Weise modifizierbar ist, und wobei die Anzahl der Verbindungsstellen und der Materialeinsatz reduziert wird und eine kostengünstige Lösung zur Verfügung gestellt wird.

Vorteilhafte Ausführungen der Erfindung sind in den Unteransprüchen enthalten.

Anhand der in den beiliegenden Zeichnungen dargestellten Ausführungsbeispielen wird die Erfindung näher erläutert. Es zeigen:
- Fig. 1 bis Fig. 6: Unterschiedliche Ausführungsformen einer Medienleitung,
- Fig. 7 und 8: Anwendungsbeispiele einer Medienleitung nach den Figuren 1 bis 6 und
- Fig. 9: eine Prinzipdarstellung einer Ausführungsform einer erfindungsgemäßen Medienleitung.

In den verschiedenen Figuren der Zeichnung sind gleiche Teile stets mit denselben Bezugszeichen versehen.

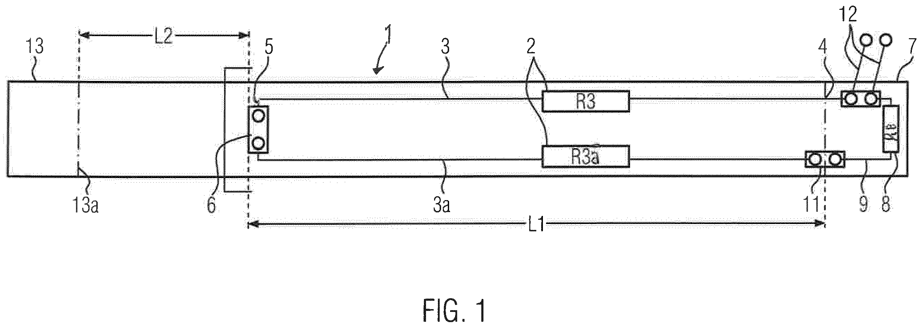

In Fig. 1 ist eine erste Ausführungsform einer beheizten Medienleitung gezeigt. Diese Medienleitung umfasst eine erste Rohr- oder Schlauchleitung 1, die vorzugsweise aus Kunststoff hergestellt und flexibel ausgebildet ist. Diese Rohr-oder Schlauchleitung 1 weist einen inneren, nicht dargestellten Strömungskanal auf, in dem ein Fluid, beispielsweise Wasser oder Harnstoff, transportiert werden kann. Am Umfang dieser ersten Rohr- oder Schlauchleitung 1 ist eine Heizeinrichtung 2 in Längsrichtung verlaufend angeordnet. Diese Heizeinrichtung 2 besteht aus mindestens einem elektrischen Heizleiter 3, der einen elektrischen Widerstand R3 aufweist. Dieser elektrische Heizleiter 3 ist vorzugsweise spiralförmig um die Rohr-oder Schlauchleitung 1 umfangsgemäß gewickelt. Dieser Heizleiter 3 ist ausgehend von einem ersten Anschlussende 4 der Medienleitung zum Anschließen zum Beispiel eines Aggregates oder einer anderen Medienleitung mittels eines Anschlussverbinders 7 nur über eine Teillänge L1 der ersten Rohr- oder Schlauchleitung 1 aufgebracht, zum Beispiel gewickelt, so dass ein nicht mit dem Heizleiter 3 versehener Abschnitt der Länge L2 der Rohr- oder Schlauchleitung 1 im Bereich vor dem, dem Anschlussende 4 gegenüberliegenden zweiten Anschlussende 13a mit einem Anschlussverbinder 13 ausgebildet ist. Im dargestellten Ausführungsbeispiel der Figur 1 ist ein zweiter elektrischer Heizleiter 3a ausgehend vom Wicklungsende 5 des Heizleiters 3 über die gleiche Teillänge L1 bis zum Anschlussende 4 vorzugsweise parallel zum Heizleiter 3 spiralförmig verlaufend zurückgewickelt. Dieser Heizleiter 3a besitzt den Widerstand R3a. Im Bereich des Wicklungsendes 5 sind die beiden Heizleiter 3, 3a an ihren Enden mittels eines elektrischen Verbinders 6, zum Beispiel einem Crimp, verbunden. Erfindungsgemäß ist das Wicklungsende 5 in Strömungsrichtung des in der Medienleitung 1 fließenden Fluids hinter dem Anschlussende 4 und um die Teillänge L2 beabstandet vor dem zweiten Anschlussende 13a zum Anschluss eines Anschlussverbinders 13 zum Verbinden mit einem Aggregat oder dergleichen oder einer anderen Rohr- oder Schlauchleitung angeordnet.

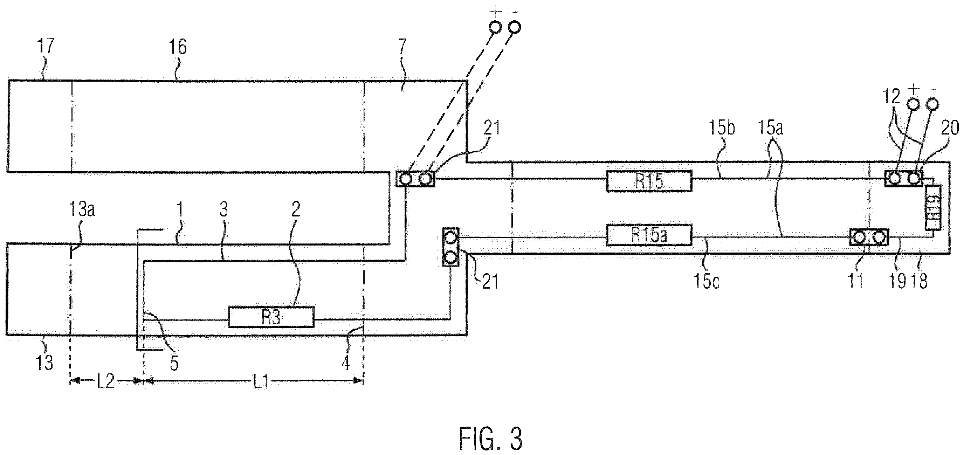

Es liegt ebenfalls im Rahmen der Erfindung, wenn der elektrische Heizleiter 3 vom Wicklungsende 5 wieder zum Anschlussende 4 unterbrechungsfrei zurückgeführt ist, siehe zum Beispiel Fig. 3, wobei hierbei ebenfalls zweckmäßig ist, wenn die Rückführung des elektrischen Heizleiters 3 in einer spiralförmigen längsverlaufenden Wicklung erfolgt, die parallel zum Verlauf des elektrischen Heizleiters 3 vom Anschlussende 4 zum Wicklungsende 5 angeordnet ist. Am Anschlussende 4 ist die Rohr- oder Schlauchleitung 1 zweckmäßigerweise, wie dargestellt, mit dem Anschlussverbinder 7 verbunden, wobei es sich vorteilhafterweise bei diesem Anschlussverbinder 7 um einen Steckverbinder handelt, der zum lösbaren Verbinden der Rohr- oder Schlauchleitung 1 mit einer weiteren Rohr- oder Schlauchleitung dienen kann oder aber beispielsweise mit einem Aggregat, wie beispielsweise einer Pumpe oder einem Tank. Vorteilhafterweise ist dieser Anschlussverbinder 7 selbst wiederum mittels einer Heizeinrichtung 8 beheizbar, wobei diese Heizeinrichtung 8 einen elektrischen Widerstand R8 aufweist. Bei dieser Heizeinrichtung 8 kann es sich um einen am Umfang des Anschlussverbinders angeordneten, vorzugsweise spiralförmig gewickelten Heizleiter 9 handeln, wobei dieser Heizleiter 9 über elektrische Verbinder 10, 11 mit den elektrischen Heizleitern 3, 3a verbunden ist. Die Anschlusskontakte des elektrischen Verbinders 10 können - wie beispielhaft dargestellt - auch gleichzeitig zum Anschluss einer Anschlussleitung 12 dienen, die mit einer elektrischen Spannungsquelle verbindbar ist. Im dargestellten Beispiel sind die Anschlusskontakte derart angeordnet, dass eine Reihenschaltung der elektrischen Heizleiter 3, 3a und 9 verwirklicht ist. Es liegt ebenfalls im Rahmen der Erfindung, die Anschlusskontakte derart mit einer elektrischen Spannungsquelle zu verbinden, dass eine Parallelschaltung der elektrischen Heizleiter 3, 3a, 9 verwirklicht ist. Es liegt ebenfalls im Rahmen der Erfindung, wenn der Anschlussverbinder 7 keine eigene Heizeinrichtung aufweist. Auch ist es im Rahmen der Erfindung möglich, auf den Anschlussverbinder 7 den Heizleiter 3 oder den Heizleiter 3a oder beide gemeinsam als Weiterführungsabschnitte weiterzuführen und ihre Enden mit einer Spannungsquelle zu verbinden.

Die Rohr- oder Schlauchleitung 1 gemäß Fig. 1 ist somit nur über die Teillänge L1 beheizbar. Eine derartige Ausführungsform ist insbesondere dann vorteilhaft, wenn das dem Anschlussende 4 gegenüberliegende Ende der Rohr- oder Schlauchleitung 1 zweckmäßigerweise ebenfalls über den Anschlussverbinder 13 beispielsweise unmittelbar mit einem Motorblock oder mit einem Ansaugstutzen eines Motors oder einer Pumpe, zum Beispiel einer Hochdruckpumpe im nahen Motorbereich, verbunden ist, wobei von diesen Bauteilen bei Inbetriebnahme eine derartige Wärmeabgabe erfolgt, dass der in der Nähe des Motorblocks bzw. des Ansaugstutzens liegende Teilbereich der Rohr- oder Schlauchleitung 1 nicht eine eigene Heizeinrichtung aufweisen muss.

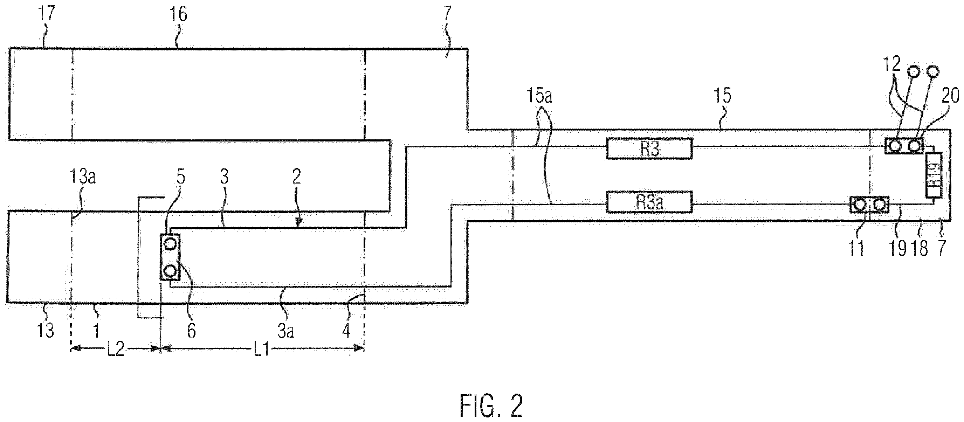

In Fig. 2 ist eine weitere Ausführungsform einer Medienleitung dargestellt. Hierbei handelt es sich um eine Zusammenschaltung der teilbeheizten Rohr- oder Schlauchleitung 1 gemäß Fig. 1, wobei der Anschlussverbinder 7 am ersten Anschlussende 4 als Dreifachverbinder, insbesondere als T-Stück, ausgebildet ist, und wobei an diesem Anschlussverbinder 7 eine über die gesamte Länge beheizte zweite Rohr- oder Schlauchleitung 15 angeschlossen ist, und über einen dritten Anschluss des Anschlussverbinders 7 eine dritte ungeheizte Rohr- oder Schlauchleitung 16 angeschlossen ist. Die dem Anschlussverbinder 7, der als Dreifachverbinder ausgebildet ist, gegenüberliegenden Enden der ersten Rohr- oder Schlauchleitung 1 und der dritten Rohr- oder Schlauchleitung 16 weisen vorteilhafterweise ebenfalls Anschlussverbinder 13, 17 zum lösbaren und insbesondere steckbaren Anschließen auf, und die über die gesamte Länge beheizbare zweite Rohr- oder Schlauchleitung 15 weist an dem dem Dreifach-Anschlussverbinder 7 gegenüberliegenden Ende einen Anschlussverbinder 18 auf, der zum Beispiel eine eigene Heizeinrichtung 19 mit einem elektrischen Widerstand R19 besitzt. Bei dem dargestellten Ausführungsbeispiel bestehen die Heizeinrichtungen der ersten Rohr- oder Schlauchleitung 1 und der zweiten Rohr-oder Schlauchleitung 15 aus einzelnen Heizleitern, die vorteilhafterweise spiralförmig um die jeweiligen beheizten Abschnitte der Rohr- oder Schlauchleitungen parallel zueinander verlaufen, wobei die Heizleiter 3, 3a der ersten Rohr- oder Schlauchleitung 1 auf der zweiten Rohr- oder Schlauchleitung 15 kontinuierlich weitergeführt sind. Im Bereich des Anschlussverbinders 18 am Anfang der zweiten Rohr- oder Schlauchleitung 15 ist im Bereich eines elektrischen Verbinders 20 zwischen der Heizeinrichtung 15a der zweiten Rohr- oder Schlauchleitung 15 und der Heizeinrichtung 19 des Anschlussverbinders 18 eine Verbindung 12 zu einer externen elektrischen Spannungsquelle vorgesehen. Bei dem dargestellten Ausführungsbeispiel sind die Heizleiter 3, 3a der ersten Rohr-oder Schlauchleitung 1 auf der zweiten Rohr- oder Schlauchleitung 15 weitergeführt und die Heizeinrichtung 19 des Anschlussverbinders 18 ist mit dieser in Reihe geschaltet.

In Fig. 3 ist eine weitere Ausführungsform der Medienleitung gemäß Fig. 2 dargestellt, wobei der Unterschied zu der Medienleitung gemäß Fig. 2 darin besteht, dass die erste Rohr- oder Schlauchleitung 1 und die zweite Rohr- oder Schlauchleitung 15 jeweils eigenständige Heizeinrichtungen 2, 15a aufweisen, die durch die Widerstände R3, R15 und R15a dargestellt sind. Hierbei ist die Heizeinrichtung 2 der ersten Rohr- oder Schlauchleitung 1 nur über eine Teillänge L1 aus einem Heizleiter 3 gebildet, der ausgehend vom Dreifach-Anschlussverbinder 7 bis zu ihrem Wicklungsende 5 und ohne Unterbrechung wieder zum Dreifach-Anschlussverbinder 7 zurückgeführt ist. Hierbei wird der Dreifach-Anschlussverbinder 7 mittels des Heizleiters 3 der ersten Rohr- oder Schlauchleitung 1 ebenfalls mit beheizt. Im Bereich des Dreifach-Anschlussverbinders 7 ist die Heizeinrichtung 15a der zweiten Rohr- oder Schlauchleitung 15 über elektrische Verbinder 21 mit der Heizeinrichtung 2 der ersten Rohr- oder Schlauchleitung 1 derart verbunden, dass eine Reihenschaltung gegeben ist, und das dem Anschlussverbinder 7 gegenüberliegende Ende der zweiten Rohr- oder Schlauchleitung 15 ist wiederum ein beheizter Anschlussverbinder 18, wie zu Fig. 2 beschrieben, und die Heizeinrichtung 19 des Anschlussverbinders 18 ist über elektrische Verbinder 20, 11 mit der Heizeinrichtung 15a der zweiten Rohr- oder Schlauchleitung 15 verbunden. Im Bereich eines der elektrischen Verbinder 11, 20 des endseitigen Anschlussverbinders 18 ist wiederum die Anschlussleitung 12 zu einer externen Spannungsquelle über entsprechende Anschlusskontakte angeschlossen. Die dritte Rohr- oder Schlauchleitung 16 ist wiederum, wie zu Fig. 2 beschrieben, ohne Heizeinrichtung ausgebildet. Die Heizeinrichtung 15a besteht zum Beispiel aus zwei spiralförmig gewickelten Heizleitern 15b, 15c.

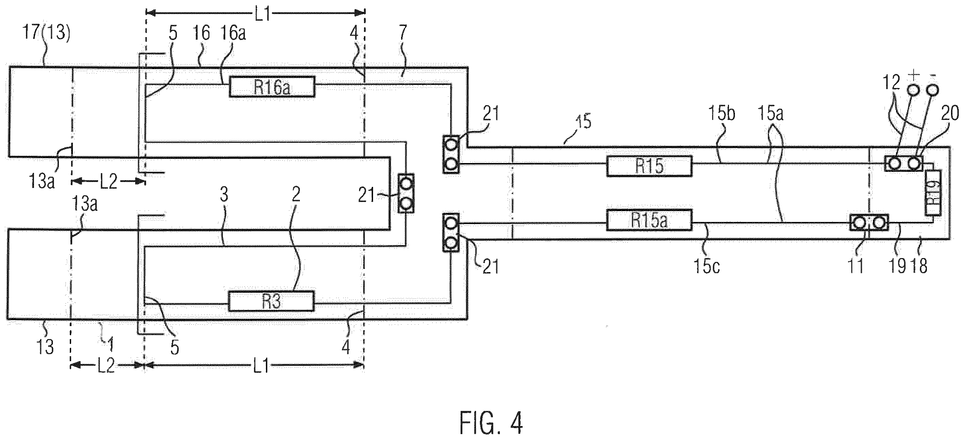

In Fig. 4 ist wiederum eine Variante zu Fig. 3 dargestellt, wobei die Beheizung der ersten Rohr- oder Schlauchleitung 1 und der zweiten Rohr- oder Schlauchleitung 15 wie in Fig. 3 ausgebildet sind, jedoch die dritte Rohr- oder Schlauchleitung 16 ebenfalls nur über eine Teillänge L1 eine elektrische Heizeinrichtung 16a aufweist, wobei diese Heizeinrichtung 16a wie diejenige ausgestaltet ist, die die erste Rohr-oder Schlauchleitung 1 aufweist. Die einzelnen Heizeinrichtungen 2, 15a, 16a der ersten, zweiten und dritten Rohr- oder Schlauchleitung 1, 15, 16 sind miteinander über elektrische Verbinder 21 im Bereich des Dreifach-Anschlussverbinders 7 untereinander verbunden, wobei eine Reihenschaltung der Heizeinrichtungen 2, 15a, 16a der ersten, zweiten und dritten Rohr- oder Schlauchleitung 1, 15, 16 dargestellt ist. Der Anschlussverbinder 18 am Anschlussende der zweiten Rohr-oder Schlauchleitung 15 ist wiederum als beheizter Anschlussverbinder 18 mit eigener Heizeinrichtung 19 ausgebildet, wobei hier eine Reihenschaltung zu den Heizeinrichtungen 2, 15a, 16a der ersten, zweiten und dritten Rohr- oder Schlauchleitung 1, 15, 16 verwirklicht ist. Der Anschluss einer externen Spannungsquelle erfolgt wieder über zwei Anschlusskontakte des Anschlussverbinders 20 zwischen dem Heizleiter 15b der zweiten Rohr- oder Schlauchleitung 15 und der Heizeinrichtung 19 des Anschlussverbinders 18.

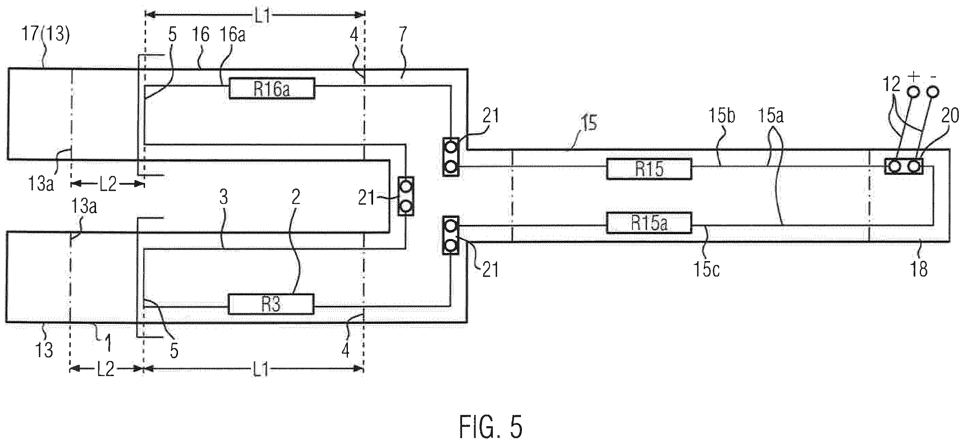

In Fig. 5 ist eine Alternative einer Medienleitung zu der Ausbildung in Fig. 4 gezeigt, wobei der Unterschied zu Fig. 4 darin besteht, dass der Anschlussverbinder 18 am Anschlussende der zweiten Rohr- oder Schlauchleitung 15 selbst keine eigene, von den Heizeinrichtungen bzw. elektrischen Leitern der zweiten Rohr- oder Schlauchleitung 15 unabhängige Heizeinrichtung aufweist. Vielmehr sind die beiden elektrischen Heizleiter 15b, 15c der Heizeinrichtung 15a der zweiten Rohr- oder Schlauchleitung 15 auf dem Anschlussverbinder 18 weitergeführt, so dass dieser hierdurch ebenfalls beheizt ist.

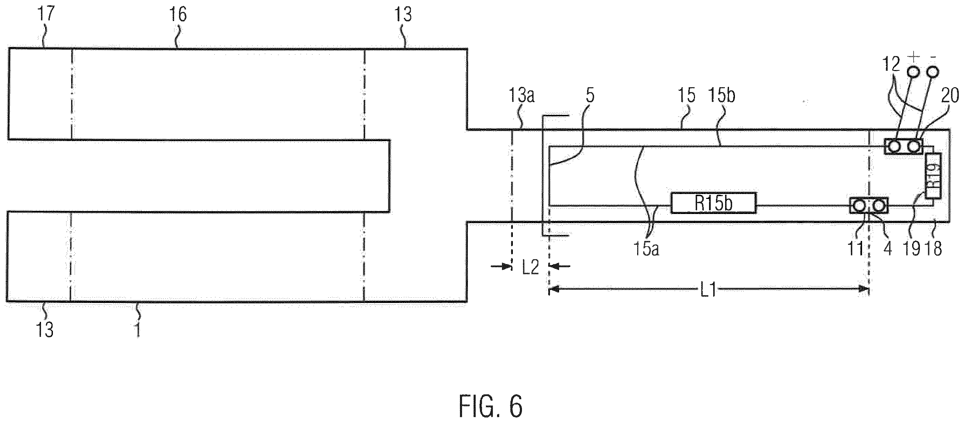

In Fig. 6 ist eine weitere Alternative einer Medienleitung dargestellt, wobei im Unterschied zu den Medienleitungen der Figuren 1 bis 5 die erste und dritte Rohr-oder Schlauchleitung 1, 16 unbeheizt sind, und die zweite Rohr- oder Schlauchleitung 15 nur über eine Teillänge L1 mit ihrer Heizeinrichtung 15a versehen ist. Hierbei ist der Heizleiter 15b, der die Heizeinrichtung 15a der zweiten teilbeheizten Rohr- oder Schlauchleitung 15 bildet, ein durchgehender Leiterdraht, der vom Anschlussverbinder 18 bis zum Wicklungsende 5 hin und von dem Wicklungsende 5 wieder zurück zum Anschlussverbinder 18 geführt ist. Der endseitige Anschlussverbinder 18 weist im dargestellten Ausführungsbeispiel eine eigene Heizeinrichtung 19 auf, die über die elektrischen Verbinder 20, 11 mit der Heizeinrichtung 15a der zweiten Rohr- oder Schlauchleitung 15 verbunden ist. Eine Spannungsversorgung mit einer externen Spannungsquelle erfolgt wiederum über die Anschlusskontakte des Anschlussverbinders 18, wobei die Heizeinrichtungen 15a und 19 in Reihe geschaltet sind. Der dem Anschlussverbinder 18 gegenüberliegende Anschlussverbinder 13 ist T-förmig ausgebildet und ist an das Ende der unbeheizten Teillänge L2 angeschlossen. An die beiden anderen Anschlüsse des T-förmigen Dreifach-Anschlussverbinders 13 sind zwei unbeheizte Rohr- oder Schlauchleitungen 1, 16 angeschlossen.

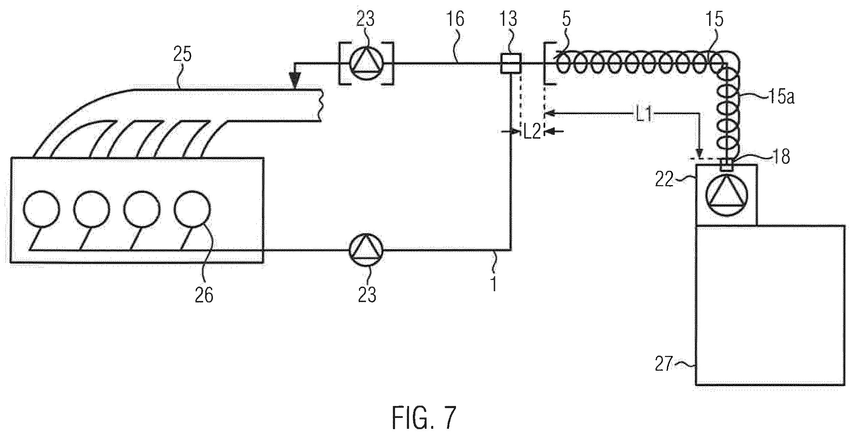

In Fig. 7 ist ein Anwendungsbeispiel, beispielsweise der Medienleitung nach Fig. 6, dargestellt. Hierbei ist ein Flüssigkeitstank 27 vorgesehen, an den beispielsweise eine Niederdruckpumpe 22 als Vorförderpumpe angeschlossen ist. An diese Pumpe 22 ist die zweite Medienleitung 15 gemäß dem Ausführungsbeispiel von Fig. 6 über den Anschlussverbinder 18 angeschlossen, der seinerseits beheizt ist. Diese über eine Teillänge L1 beheizte zweite Medienleitung 15 wird über den Dreifach-Anschlussverbinder 13 am Ende ihrer nicht beheizten Teillänge L2 mit den beiden unbeheizten Rohr- oder Schlauchleitungen 1, 16, und zwar der ersten Rohr- oder Schlauchleitung 1 und der dritten Rohr- oder Schlauchleitung 16, gemäß Fig. 6 verbunden, wobei die erste Rohr- oder Schlauchleitung 1 endseitig beispielsweise mit einer Hochdruckpumpe 23 verbunden ist, die ihrerseits in den Medienleitungen fließendes Wasser in den Motor 24 einspritzt, und gleichzeitig oder alternativ kann auch über die dritte Medienleitung 16 noch das geförderte Wasser über den Ansaugkrümmer 25 eingeführt werden. Es kann aber auch nur eine Direkteinspritzung in die Zylinder des Zylinderblocks des Motors 24 erfolgen oder nur eine Einspritzung in den Ansaugkrümmer 25. Bei einer Einspritzung in den Ansaugkrümmer 25 kann auch eine Unterdrucklösung vorhanden sein, wobei die Hochdruckpumpe 23 entfällt.

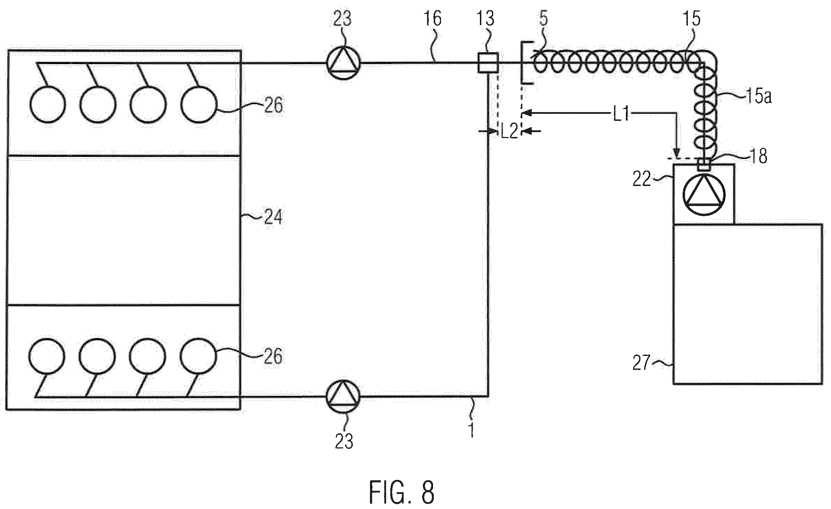

Eine Variante zu der Ausbildung in Fig. 7 ist in Fig. 8 dargestellt, wobei wiederum eine Medienleitung gemäß Fig. 6 zur Anwendung kommt, wobei die beiden nicht beheizten Rohr- oder Schlauchleitungen 1, 16 dazu dienen, beispielsweise Wasser direkt in die Brennräume der beiden Zylinderreihen 26 mittels Hochdruckpumpen einzuspritzen.

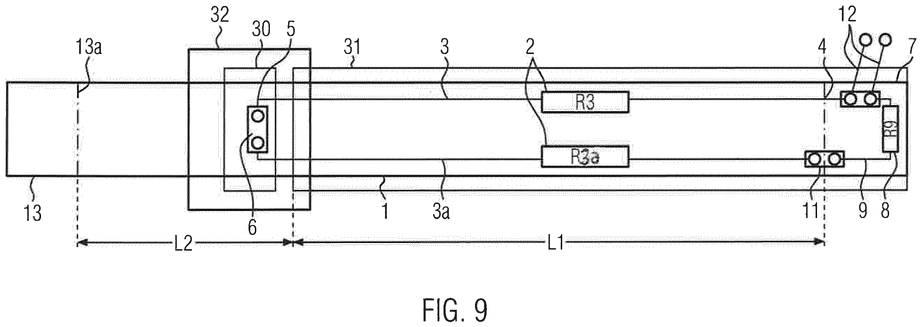

In Figur 9 ist dargestellt, dass es zweckmäßig ist, wenn die Rohr- oder Schlauchleitung 1 und ihre Heizeinrichtung 15a, siehe Figur 2, von einem Hüllsystem 31 umfasst wird. Dieses Hüllsystem 31 kann zum Beispiel auch den Anschlussverbinder 7 am Anschlussende 4 mit einbeziehen. Das Wicklungsende 5 ist auf der Rohr- oder Schlauchleitung 1 derart fixiert, und zwar zum Beispiel mittels eines Fixierteils 30, dass das Wicklungsende 5 auf der Rohr- oder Schlauchleitung 1 in deren Längsrichtung und umfangsgemäß fixiert ist. Mit einem Ende endet das Hüllsystem 31 vor dem Fixierteil 30. Eine Kapselung 32 umschließt das Ende des Hüllsystems 31 und das Fixierteil 30. Die Kapselung 32 ist ebenfalls derart zur Rohr-oder Schlauchleitung 1 angeordnet, dass die Kapselung 32 in Längsrichtung der Rohr- oder Schlauchleitung 1 und in ihrer Umfangsrichtung lagefixiert ist. Im Übrigen wird auf die Ausführung gemäß Fig. 1 verwiesen.

Die in den Zeichnungen eingezeichneten Widerstände R3, R3a, R19, R15, R15a, R16a, R15b sind jeweils die elektrischen Widerstände der einzelnen Heizleiter.

### Bezugszeichenliste

- 1: Erste Rohr- oder Schlauchleitung
- 2: Heizeinrichtung
- 3: Elektrischer Heizleiter
- 3a: Zweiter elektrischer Heizleiter
- 4: Erstes Anschlussende
- 5: Wicklungsende
- 6: Elektrischer Verbinder
- 7: Anschlussverbinder
- 8: Heizeinrichtung
- 9: Heizleiter
- 10: Elektrischer Verbinder
- 11: Elektrischer Verbinder
- 12: Anschlussleitung
- 13: Anschlussverbinder
- 13a: Zweites Anschlussende
- 15: Zweite Rohr- oder Schlauchleitung
- 15a: Heizeinrichtung
- 15b,c: Heizleiter
- 16: Dritte Rohr- oder Schlauchleitung
- 16a: Heizeinrichtung
- 17: Anschlussverbinder
- 18: Anschlussverbinder
- 19: Heizeinrichtung
- 20: Elektrischer Verbinder
- 21: Elektrische Verbinder
- 22: Niederdruckpumpe
- 23: Hochdruckpumpe
- 24: Motor
- 25: Ansaugkrümmer
- 26: Zylinderreihen
- 27: Flüssigkeitstank
- 30: Fixierteil
- 31: Hüllsystem
- 32: Kapselung

- R: Widerstand
- L1: Teillänge
- L2: Teillänge

## Patentansprüche

1. Beheizte Medienleitung umfassend eine Rohr- oder Schlauchleitung (1, 15) mit einem inneren Strömungskanal sowie einer am Umfang der Rohr- oder Schlauchleitung (1, 15) verlaufenden Heizeinrichtung (2, 15a, 16a), wobei die Heizeinrichtung (2, 15a, 16a) aus mindestens einem elektrischen Heizleiter (3, 3a, 15b, 16a) besteht, der über eine Teillänge (L1) der Rohr-oder Schlauchleitung (1, 15, 16) ausgehend von einem ersten Anschlussende (4) der Rohr- oder Schlauchleitung (1) bis zu einem Wicklungsende (5) insbesondere spiralförmig gewickelt verläuft, so dass ein nicht mit dem Heizleiter (3) versehener Abschnitt mit einer Teillänge (L2) der Rohr- oder Schlauchleitung (1) vor einem zweiten Anschlussende (13a) ausgebildet ist,
wobei das Wicklungsende (5) in Längsrichtung der Rohr- oder Schlauchleitung (1, 15, 16) und in ihrer Umfangsrichtung gegen eine Lageveränderung durch ein Fixierteil (30) fixiert ist, wobei die Rohr- oder Schlauchleitung (1, 15, 16) ein die Heizeinrichtung (2, 15a, 16a) und die Rohr-oder Schlauchleitung (1, 15, 16) umfassendes Hüllsystem (31) aufweist und **dadurch gekennzeichnet, dass** das eine Ende des Hüllsystems (31) und das Wicklungsende (5) mit dem Fixierteil (30) in einer Kapselung (32) eingeschlossen ist, die in Bezug auf die Rohr- oder Schlauchleitung (1, 15, 16) in Längsrichtung und in Umfangsrichtung in ihrer Lage fixiert ist.

2. Beheizte Medienleitung nach Anspruch 1,
**dadurch gekennzeichnet, dass** ausgehend von dem Wicklungsende (5) der elektrische Heizleiter (3, 3a, 15b, 16a) wieder zum Anschlussende (4) unterbrechungsfrei zurückgeführt ist.

3. Beheizte Medienleitung nach Anspruch 2,
**dadurch gekennzeichnet, dass** der zurückgeführte Heizleiter (3, 3a, 15b, 16a) spiralförmig gewickelt verläuft, vorzugsweise parallel zu dem vom Anschlussende (4) bis zum Wicklungsende (5) verlaufenden Heizleiter (3, 3a, 15b, 16a).

4. Beheizte Medienleitung nach Anspruch 2 oder 3,
**dadurch gekennzeichnet, dass** eine elektrische Spannungsquelle im Bereich des Anschlussendes (4) mit Enden der beiden Heizleiterwicklungen über eine Anschlussleitung (12) anschließbar ist.

5. Beheizte Medienleitung nach Anspruch 1,
**dadurch gekennzeichnet, dass** die elektrische Heizeinrichtung (2, 15a, 16a) aus zwei parallel verlaufenden elektrischen Heizleitern (3, 3a, 15b, 15c) gebildet ist, die gemeinsam spiralförmig gewickelt sind.

6. Beheizte Medienleitung nach Anspruch 5,
**dadurch gekennzeichnet, dass** die beiden Heizleiter (3, 3a, 15b, 15c) an ihren Enden im Bereich des Wicklungsendes (5) über einen elektrischen Verbinder (6) miteinander leitend verbunden sind.

7. Beheizte Medienleitung nach einem der Ansprüche 2 bis 6,
**dadurch gekennzeichnet, dass** die elektrischen Heizleiter (3, 3a, 15b, 15c) an ihren Enden im Bereich des Anschlussendes (4) über eine Anschlussleitung (12) mit einer elektrischen Spannungsquelle anschließbar sind.

8. Beheizte Medienleitung nach einem der Ansprüche 1 bis 7,
**dadurch gekennzeichnet, dass** am Anschlussende (4) ein Anschlussverbinder (7, 18) zum lösbaren Verbinden mit mindestens einer weiteren Rohr- oder Schlauchleitung oder mit einem Aggregat an der ersten Rohr- oder Schlauchleitung (1) angeschlossen ist.

9. Beheizte Medienleitung nach Anspruch 8,
**dadurch gekennzeichnet, dass** der Anschlussverbinder (7, 18) eine elektrische Heizeinrichtung (8, 19) aufweist, die mit der Heizeinrichtung (2, 15a) der Rohr- oder Schlauchleitungen (1, 15) in Reihe oder parallel geschaltet ist.

10. Beheizte Medienleitung nach Anspruch 9,
**dadurch gekennzeichnet, dass** die elektrische Heizeinrichtung (8, 19) des Anschlussverbinders (7, 18) von einem Weiterführungsabschnitt der Heizeinrichtung (2, 15a, 16a) der beheizten oder teilbeheizten Rohr- oder Schlauchleitung (1, 15, 16) gebildet ist.

11. Beheizte Medienleitung nach Anspruch 9,
**dadurch gekennzeichnet, dass** die Heizeinrichtung (8, 19) des Anschlussverbinders (7, 18) aus einer eigenständigen Heizwicklung gebildet ist.

12. Beheizte Medienleitung nach einem der Ansprüche 8 bis 11,
**dadurch gekennzeichnet, dass** mittels des ersten Anschlussverbinders (7) eine beheizte oder unbeheizte zweite Rohr- oder Schlauchleitung (15) angeschlossen ist.

13. Beheizte Medienleitung nach einem der Ansprüche 8 bis 11,
**dadurch gekennzeichnet, dass** der erste Anschlussverbinder (7) als Abzweigverbinder derart ausgebildet ist, dass sowohl eine zweite beheizte Rohr- oder Schlauchleitung (15) als auch eine dritte teilbeheizte oder unbeheizte Rohr- oder Schlauchleitung (16) angeschlossen sind.

14. Beheizte Medienleitung nach Anspruch 9,
**dadurch gekennzeichnet, dass** an dem dem ersten Anschlussverbinder (7) gegenüberliegenden Ende der ersten teilbeheizten Rohr- oder Schlauchleitung (1) ein Anschlussverbinder (13) angeschlossen ist zum lösbaren Anschließen von mindestens einer unbeheizten Rohr- oder Schlauchleitung oder eines Aggregats.

15. Beheizte Medienleitung nach Anspruch 9,
**dadurch gekennzeichnet, dass** die teilbeheizte Rohr- oder Schlauchleitung (1) über den von einer Heizeinrichtung beheizten Anschlussverbinder (7) mit einer zweiten teilbeheizten, der ersten teilbeheizten Rohr- oder Schlauchleitung (1) gleichen Rohr- oder Schlauchleitung (16) und einer zweiten beheizten Rohr- oder Schlauchleitung (15) verbunden ist, die an ihrem anderen Ende mit einem beheizten oder unbeheizten Anschlussverbinder (18) ausgebildet ist, und die Heizeinrichtungen (2, 15a, 16a) der Rohr- oder Schlauchleitungen (1, 15, 16) und der Anschlussverbinder (7, 18) elektrisch in Reihe geschaltet sind sowie im Bereich eines der Anschlussverbinder (18) eine Anschlussleitung (12) zum Anschließen einer elektrischen Spannungsquelle vorhanden sind.

16. Beheizte Medienleitung nach einem der Ansprüche 1 bis 15,
**dadurch gekennzeichnet, dass** die elektrischen Heizleiter (3, 3a, 15b, 15c, 9) der Rohr- oder Schlauchleitungen (1, 15, 16) und der Anschlussverbinder (7, 18) als Drahtlitzen ausgebildet sind.

## Claims

1. Heated media line comprising a pipeline or hose line (1, 15) which has an inner flow channel and has a heating device (2, 15a, 16a) extending on the circumference of the pipeline or hose line (1, 15), wherein the heating device (2, 15a, 16a) consists of at least one electrical heating conductor (3, 3a, 15b, 16a) which extends, in particular in a helically wound manner, over a partial length (L1) of the pipeline or hose line (1, 15, 16) from a first attachment end (4) of the pipeline or hose line (1) to a winding end (5), so that a portion not provided with the heating conductor (3) and with a partial length (L2) of the pipeline or hose line (1) is formed before a second attachment end (13a), wherein the winding end (5) is fixed in the longitudinal direction of the pipeline or hose line (1, 15, 16) and in the circumferential direction thereof against positional displacement by a fixing part (30), wherein the pipeline or hose line (1, 15, 16) has an enveloping system (31) containing the heating device (2, 15a, 16a) and the pipeline or hose line (1, 15, 16), and
**characterized in that** one end of the enveloping system (31) and the winding end (5) are enclosed with the fixing part (30) in an encapsulation (32) which, in relation to the pipeline or hose line (1, 15, 16), is fixed in position in the longitudinal direction and in the circumferential direction.

2. Heated media line according to Claim 1,
**characterized in that** the electrical heating conductor (3, 3a, 15b, 16a) is led from the winding end (5) back to the attachment end (4) again without interruption.

3. Heated media line according to Claim 2,
**characterized in that** the led-back heating conductor (3, 3a, 15b, 16a) extends in a helically wound manner, preferably parallel to the heating conductor (3, 3a, 15b, 16a) extending from the attachment end (4) to the winding end (5).

4. Heated media line according to Claim 2 or 3,
**characterized in that,** in the region of the attachment end (4), an electrical voltage source can be connected to ends of the two heating conductor windings via a connection line (12).

5. Heated media line according to Claim 1,
**characterized in that** the electrical heating device (2, 15a, 16a) is formed from two electrical heating conductors (3, 3a, 15b, 15c) which extend in a parallel manner and which are helically wound together.

6. Heated media line according to Claim 5,
**characterized in that,** in the region of the winding end (5), the two heating conductors (3, 3a, 15b, 15c) are conductively connected to one another at their ends via an electrical connector (6).

7. Heated media line according to one of Claims 2 to 6,
**characterized in that,** in the region of the attachment end (4), the electrical heating conductors (3, 3a, 15b, 15c) can be connected at their ends to an electrical voltage source via a connection line (12).

8. Heated media line according to one of Claims 1 to 7,
**characterized in that,** at the attachment end (4), an attachment connector (7, 18) for releasable connection to at least one further pipeline or hose line or to a unit is attached to the first pipeline or hose line (1).

9. Heated media line according to Claim 8,
**characterized in that** the attachment connector (7, 18) has an electrical heating device (8, 19) which is connected in series or parallel with the heating device (2, 15a) of the pipeline or hose line (1, 15) .

10. Heated media line according to Claim 9,
**characterized in that** the electrical heating device (8, 19) of the attachment connector (7, 18) is formed by a continuation portion of the heating device (2, 15a, 16a) of the heated or partially heated pipeline or hose line (1, 15, 16).

11. Heated media line according to Claim 9,
**characterized in that** the heating device (8, 19) of the attachment connector (7, 18) is formed from an independent heating winding.

12. Heated media line according to one of Claims 8 to 11,
**characterized in that** a heated or unheated second pipeline or hose line (15) is attached by means of the first attachment connector (7).

13. Heated media line according to one of Claims 8 to 11,
**characterized in that** the first attachment connector (7) is, as a branch connector, configured in such a way that both a second heated pipeline or hose line (15) and a third partially heated or unheated pipeline or hose line (16) are attached.

14. Heated media line according to Claim 9,
**characterized in that,** to that end of the first partially heated pipeline or hose line (1) which is opposite the first attachment connector (7), there is attached an attachment connector (13) for releasable attachment of at least one unheated pipeline or hose line or of a unit.

15. Heated media line according to Claim 9,
**characterized in that** the partially heated pipeline or hose line (1) is connected via the attachment connector (7), which is heated by a heating device, to a second partially heated pipeline or hose line (16), which is identical to the first partially heated pipeline or hose line (1), and to a second heated pipeline or hose line (15) which, at its other end, is configured with a heated or unheated attachment connector (18), and the heating devices (2, 15a, 16a) of the pipelines or hose lines (1, 15, 16) and of the attachment connectors (7, 18) are electrically connected in series, and, in the region of one of the attachment connectors (18), a connection line (12) for connection of an electrical voltage source is present.

16. Heated media line according to one of Claims 1 to 15,
**characterized in that** the electrical heating conductors (3, 3a, 15b, 15c, 9) of the pipelines or hose lines (1, 15, 16) and of the attachment connectors (7, 18) are in the form of wires strands.

## Revendications

1. Conduite de fluide chauffée comprenant une conduite tubulaire ou flexible (1, 15) pourvue d'un canal d'écoulement intérieur, ainsi que d'un dispositif chauffant (2, 15a, 16a) s'étendant sur la circonférence de la conduite tubulaire ou flexible (1, 15), le dispositif chauffant (2, 15a, 16a) étant constitué d'au moins un conducteur chauffant électrique (3, 3a, 15b, 16a), qui s'étend sous forme enroulée, notamment en spirale, sur une longueur partielle (L1) de la conduite tubulaire ou flexible (1, 15, 16) à partir d'une première extrémité de raccordement (4) de la conduite tubulaire ou flexible (1) jusqu'à une extrémité d'enroulement (5), de telle sorte qu'une section non munie du conducteur chauffant (3) est formée avec une longueur partielle (L2) de la conduite tubulaire ou flexible (1) avant une deuxième extrémité de raccordement (13a), l'extrémité d'enroulement (5) étant fixée dans la direction longitudinale de la conduite tubulaire ou flexible (1, 15, 16) et dans sa direction circonférentielle contre un changement de position par une partie de fixation (30), la conduite tubulaire ou flexible (1, 15, 16) comprenant un système d'enveloppe (31) englobant le dispositif chauffant (2, 15a, 16a) et la conduite tubulaire ou flexible (1, 15, 16), et **caractérisée en ce qu'**une extrémité du système d'enveloppe (31) et l'extrémité d'enroulement (5) pourvue de la partie de fixation (30) sont enfermées dans un blindage (32), qui est fixé en position dans la direction longitudinale et dans la direction circonférentielle par rapport à la conduite tubulaire ou flexible (1, 15, 16).

2. Conduite de fluide chauffée selon la revendication 1, **caractérisée en ce qu'**à partir de l'extrémité d'enroulement (5), le conducteur chauffant électrique (3, 3a, 15b, 16a) est renvoyé sans interruption jusqu'à l'extrémité de raccordement (4).

3. Conduite de fluide chauffée selon la revendication 2, **caractérisée en ce que** le conducteur chauffant renvoyé (3, 3a, 15b, 16a) s'étend sous forme enroulée en spirale, de préférence parallèlement au conducteur chauffant (3, 3a, 15b, 16a) s'étendant de l'extrémité de raccordement (4) jusqu'à l'extrémité d'enroulement (5).

4. Conduite de fluide chauffée selon la revendication 2 ou 3, **caractérisée en ce qu'une** source de tension électrique peut être raccordée dans la zone de l'extrémité de raccordement (4) avec des extrémités des deux enroulements de conducteur chauffant par l'intermédiaire d'une conduite de raccordement (12).

5. Conduite de fluide chauffée selon la revendication 1, **caractérisée en ce que** le dispositif chauffant électrique (2, 15a, 16a) est formé par deux conducteurs chauffants électriques (3, 3a, 15b, 15c) s'étendant parallèlement, qui sont enroulés en spirale conjointement.

6. Conduite de fluide chauffée selon la revendication 5, **caractérisée en ce que** les deux conducteurs chauffants (3, 3a, 15b, 15c) sont connectés l'un à l'autre de manière conductrice au niveau de leurs extrémités dans la zone de l'extrémité d'enroulement (5) par l'intermédiaire d'un connecteur électrique (6).

7. Conduite de fluide chauffée selon l'une quelconque des revendications 2 à 6, **caractérisée en ce que** les conducteurs chauffants électriques (3, 3a, 15b, 15c) peuvent être raccordés à une source de tension électrique au niveau de leurs extrémités dans la zone de l'extrémité de raccordement (4) par l'intermédiaire d'une conduite de raccordement (12).

8. Conduite de fluide chauffée selon l'une quelconque des revendications 1 à 7, **caractérisée en ce qu'**au niveau de l'extrémité de raccordement (4), un connecteur de raccordement (7, 18) pour la connexion amovible à au moins une autre conduite tubulaire ou flexible ou à un ensemble est raccordé à la première conduite tubulaire ou flexible (1).

9. Conduite de fluide chauffée selon la revendication 8, **caractérisée en ce que** le connecteur de raccordement (7, 18) comprend un dispositif chauffant électrique (8, 19), qui est couplé en série ou en parallèle au dispositif chauffant (2, 15a) des conduites tubulaires ou flexibles (1, 15).

10. Conduite de fluide chauffée selon la revendication 9, **caractérisée en ce que** le dispositif chauffant électrique (8, 19) du connecteur de raccordement (7, 18) est formé par une section de continuation du dispositif chauffant (2, 15a, 16a) de la conduite tubulaire ou flexible chauffée ou partiellement chauffée (1, 15, 16).

11. Conduite de fluide chauffée selon la revendication 9, **caractérisée en ce que** le dispositif chauffant (8, 19) du connecteur de raccordement (7, 18) est formé par un enroulement chauffant autonome.

12. Conduite de fluide chauffée selon l'une quelconque des revendications 8 à 11, **caractérisée en ce qu'**une deuxième conduite tubulaire ou flexible chauffée ou non chauffée (15) est raccordée au moyen du premier connecteur de raccordement (7).

13. Conduite de fluide chauffée selon l'une quelconque des revendications 8 à 11, **caractérisée en ce que** le premier connecteur de raccordement (7) est configuré en tant que connecteur de dérivation, de telle sorte qu'aussi bien une deuxième conduite tubulaire ou flexible chauffée (15) qu'une troisième conduite tubulaire ou flexible partiellement chauffée ou non chauffée (16) sont raccordées.

14. Conduite de fluide chauffée selon la revendication 9, **caractérisée en ce qu'**un connecteur de raccordement (13) est raccordé à l'extrémité, opposée au premier connecteur de raccordement (7), de la première conduite tubulaire ou flexible partiellement chauffée (1), pour le raccordement amovible d'au moins une conduite tubulaire ou flexible non chauffée ou d'un ensemble.

15. Conduite de fluide chauffée selon la revendication 9, **caractérisée en ce que** la conduite tubulaire ou flexible partiellement chauffée (1) est connectée par l'intermédiaire du connecteur de raccordement (7) chauffé par un dispositif chauffant à une deuxième conduite tubulaire ou flexible partiellement chauffée (16), identique à la première conduite tubulaire ou flexible partiellement chauffée (1), et une deuxième conduite tubulaire ou flexible chauffée (15), qui est configurée à son autre extrémité avec un connecteur de raccordement chauffé ou non chauffé (18), et les dispositifs chauffants (2, 15a, 16a) des conduites tubulaires ou flexibles (1, 15, 16) et des connecteurs de raccordement (7, 18) sont couplés électriquement en série, et une conduite de raccordement (12) est présente dans la zone d'un des connecteurs de raccordement (18) pour le raccordement d'une source de tension électrique.

16. Conduite de fluide chauffée selon l'une quelconque des revendications 1 à 15, **caractérisée en ce que** les conducteurs chauffants électriques (3, 3a, 15b, 15c, 9) des conduites tubulaires ou flexibles (1, 15, 16) et des connecteurs de raccordement (7, 18) sont configurés sous la forme de fils toronnés.
